# FASCICULE DE BREVET EUROPEEN

(11) **EP 2 570 331 B1**
(45) Date de publication et mention de la délivrance du brevet: **16.07.2014**
(21) Numéro de dépôt: 12181275.4
(22) Date de dépôt: 22.08.2012
(51) Int. Cl.: B62D 7/15

(54) **Dispositif de direction de véhicule automoteur**
Lenkvorrichtung eines selbstfahrenden Fahrzeugs
Steering device of a self-propelled vehicle

(30) Priorité: 14.09.2011 FR 1158185
(43) Date de publication de la demande: 20.03.2013
(73) Titulaire: MANITOU BF, 44150 Ancenis (FR)
(72) Inventeur: Champion, Philippe, 44370 Montrelais (FR)
(74) Mandataire: Kaspar, Jean-Georges

(56) Documents cités:
- FR-A5- 2 208 370
- US-A1- 2008 001 380

## Description

L'invention est relative à un dispositif de direction de véhicule automoteur, notamment de direction de véhicule de manutention.

Le déplacement d'un véhicule automoteur comportant des roues, par exemple d'un chariot de manutention à bras télescopique ou d'une grue, est effectué généralement à l'aide d'essieux motodirecteurs mécaniques à différentiel. Les essieux motodirecteurs mécaniques à différentiel peuvent généralement comporter des différentiels à glissement limité.

Dans le cas où on souhaite obtenir un mouvement supplémentaire de rotation d'un bras télescopique de manutention ou d'une flèche de grue, on utilise généralement une couronne de rotation de type connu pour assurer cette fonction.

Un premier but de l'invention est d'obtenir un mouvement de rotation autour d'un axe vertical, sans utiliser les couronnes de rotation connues pour assurer cette fonction, en conservant ainsi la rigidité et la compacité de l'engin de manutention.

On connaît des systèmes de rotation appliqués à d'autres véhicules automoteurs tels que les grues et les pelles excavatrices ou, par exemple, à des remorques ou « boggies », ou d'autres types de chariots de manutention.

Ces systèmes de rotation connus nécessitent cependant l'utilisation de systèmes particuliers incompatibles avec une transmission mécanique classique.

Un deuxième but de l'invention est d'obtenir une rotation du véhicule automoteur sur lui-même autour d'un axe sensiblement vertical en restant compatible avec les systèmes de transmission mécanique classiques, en conservant ainsi leurs caractéristiques propres de compacité, rigidité et rendement, sans modification importante de l'architecture de conception des engins.

Le document FR 2.208.370 décrit un dispositif de direction de véhicule automoteur selon le préambule de la revendication 1.

L'invention a pour objet un dispositif de direction de véhicule automoteur, notamment de véhicule de manutention, ledit véhicule automoteur comportant un essieu motodirecteur avant et un essieu motodirecteur arrière, chaque essieu motodirecteur étant associé à un mécanisme de direction, dans lequel chaque mécanisme de direction comporte deux actionneurs de direction reliés par des moyens de solidarisation et de désolidarisation, de manière à diriger normalement le véhicule automoteur dans la position de solidarisation desdits actionneurs et de manière à faire tourner le véhicule automoteur autour d'un axe sensiblement vertical dans la position de désolidarisation desdits actionneurs, dans lequel le mécanisme de direction comporte deux vérins hydrauliques comportant deux tiges associées à deux pistons, les deux pistons étant aptes à être solidarisés de manière à former un vérin hydraulique à deux tiges pour diriger normalement le véhicule automoteur et aptes à être désolidarisés de manière à former deux vérins hydrauliques séparés pour faire tourner le véhicule automoteur autour d'un axe sensiblement vertical, caractérisé par le fait que les deux actionneurs de direction sont verrouillés l'un à l'autre dans la position de solidarisation par un moyen mécanique positif passif.

Selon d'autres caractéristiques alternatives de l'invention :
- Les deux pistons définissent entre eux une chambre apte à être alimentée en pression hydraulique par un passage ménagé dans la tige d'un piston.
- Les moyens de solidarisation et de désolidarisation peuvent comporter une couronne à billes de verrouillage et un anneau de verrouillage à gorge, de manière à verrouiller les billes dans la gorge dans la position de solidarisation pour solidariser les deux pistons entre eux et de manière à libérer les billes de la gorge lors de la désolidarisation des deux pistons.
- Les moyens de solidarisation et de désolidarisation des deux pistons comportent avantageusement une bague annulaire de verrouillage.
- Le dispositif comporte en outre un moyen d'entraînement en rotation d'au moins un arbre de transmission, de manière à faire tourner le véhicule automoteur autour d'un axe sensiblement vertical dans la position de désolidarisation.
- Le dispositif comporte avantageusement un moyen de blocage d'arbre d'entrée de différentiel d'essieu motodirecteur, de manière à forcer les roues d'un essieu motodirecteur à tourner en sens inverse l'une de l'autre.
- Le dispositif est commandé par le système de direction normale du véhicule automoteur auquel le dispositif est destiné.
- Le dispositif comporte un circuit hydraulique apte à être relié au système de direction normale pour commander la rotation du véhicule automoteur.

L'invention sera mieux comprise grâce à la description qui va suivre, donnée à titre d'exemple non limitatif, en référence aux dessins annexés dans lesquels :
- La figure 1 représente schématiquement une vue de dessus d'un véhicule automoteur selon l'invention dans la position de rotation autour d'un axe sensiblement vertical.
- La figure 2 représente schématiquement une vue partielle en coupe d'un mécanisme de direction selon l'invention dans la position de solidarisation.
- La figure 3 représente schématiquement une vue en coupe d'un mécanisme de direction de dispositif selon l'invention dans une position de début de désolidarisation.
- La figure 4 représente schématiquement une vue en coupe d'un mécanisme de direction de dispositif selon l'invention dans la position de désolidarisation.

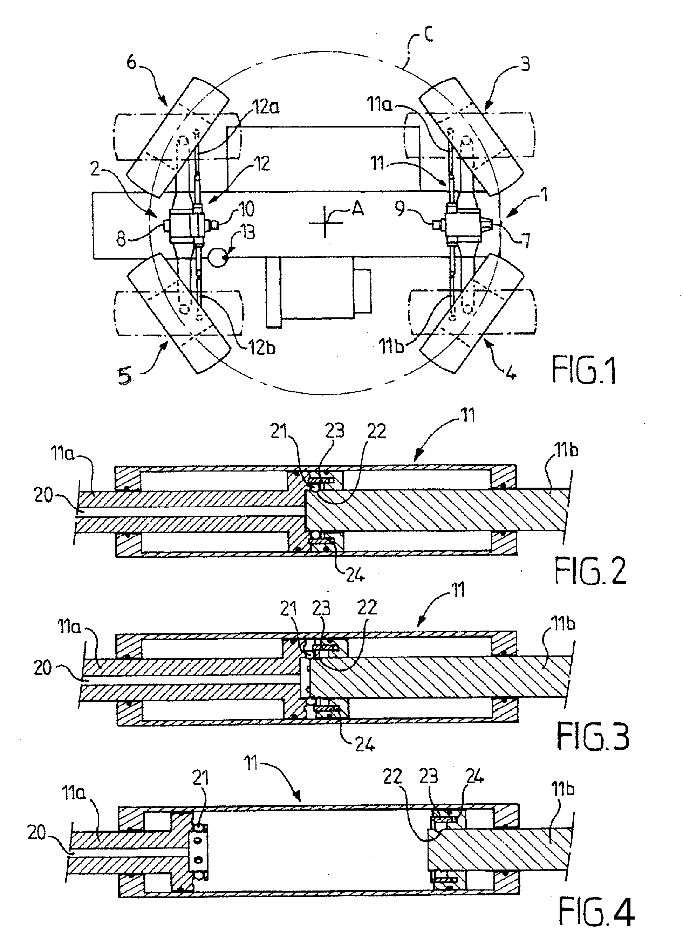

En référence aux figures 1 à 4, les éléments identiques ou fonctionnellement équivalents sont repérés par des chiffres de référence identiques.

Sur la figure 1, un véhicule automoteur comportant un dispositif de direction selon l'invention est muni d'un agencement cinématique avec un essieu motodirecteur avant (1) et un essieu motodirecteur arrière (2). L'essieu motodirecteur avant (1) est un essieu à différentiel à glissement limité entraînant deux roues avant (3 et 4) motrices et directrices. La direction de l'essieu motodirecteur avant (1) est une direction hydrostatique à vérin central à double effet comportant deux tiges de sortie.

L'essieu motodirecteur arrière (2) est un essieu motodirecteur à différentiel à glissement limité pour l'entraînement et l'orientation de deux roues arrière motrices et directrices (6 et 5). La direction de l'essieu motodirecteur arrière (2) est une direction hydrostatique à vérin central à double effet comportant deux tiges de sortie.

L'entraînement de l'essieu motodirecteur avant (1) est assuré par l'intermédiaire d'un arbre d'entrée (9) tandis que l'entraînement de l'essieu motodirecteur arrière (2) est assuré par l'intermédiaire d'un arbre d'entrée (10).

Les arbres d'entrée (9 et 10) sont reliés de manière connue à des sorties d'une boîte de vitesses conçue de manière que les arbres d'entrée (9 et 10) soient entraînés simultanément à la même vitesse par l'intermédiaire de cardans.

L'essieu motodirecteur avant (1) comporte un mécanisme de direction (11) présentant deux actionneurs de direction avec des tiges de sortie (11a, 11b).

L'essieu motodirecteur arrière (2) comporte un mécanisme de direction (12) avec deux actionneurs de direction comportant des tiges de sortie (12a, 12b).

Dans la position de direction normale, les tiges de sortie (11a, 11b) sont reliées à deux pistons solidarisés entre eux par un moyen mécanique positif passif, de manière à faire fonctionner le mécanisme de direction (11) comme un vérin hydraulique comportant un seul piston et deux tiges de sortie (11a, 11b).

Dans la position de rotation du véhicule automoteur sur lui-même autour d'un axe sensiblement vertical (A), les tiges de sortie (11a, 11b) sont repoussées extérieurement pour orienter les roues directrices (3 et 4) selon une orientation correspondant à une trajectoire circulaire alignée sur un cercle moyen (C).

Pour passer du mode de rotation représenté en traits pleins à la figure 1 à un mode de direction normale représenté en traits pointillés, l'opérateur du véhicule de manutention actionne une commande spécifique.

L'effet de la commande spécifique est de provoquer une solidarisation des actionneurs de direction (11a, 11b) pour l'essieu motodirecteur avant (1) et des actionneurs de direction (12a, 12b) pour l'essieu motodirecteur arrière (2).

Dans le cas d'une direction hydrostatique, les chambres extérieures des vérins de direction correspondants sont alimentées pour diriger normalement le véhicule automoteur, et les deux tiges (11a, 11b) sont solidarisées par l'intermédiaire des pistons qui les prolongent pour former un vérin hydraulique à piston unique et à deux tiges permettant de diriger normalement le véhicule automoteur.

L'invention n'est pas limitée à une direction hydrostatique, mais s'étend également à tous modes de direction permettant de solidariser les deux actionneurs de direction pour diriger normalement le véhicule automoteur, et permettant de désolidariser les deux actionneurs de direction pour orienter les roues comme représenté en traits pleins à la figure 1 et pour faire tourner le véhicule automoteur autour de l'axe sensiblement vertical (A) dans cette position de désolidarisation des actionneurs.

L'invention peut en particulier s'étendre à des vérins électriques, ou à tous autres types d'actionneurs équivalents.

Dans le cas d'une direction hydrostatique, les actionneurs correspondants définissent deux chambres extérieures dans la position de solidarisation et trois chambres dans la position de désolidarisation.

Ces trois chambres comportent les deux chambres extérieures précitées et une chambre centrale permettant la séparation des pistons associés aux tiges de sortie (11a, 11b, 12a, 12b).

Lorsqu'un opérateur ordonne de passer du mode de direction normale du véhicule automoteur à un mode de rotation représenté en traits pleins sur la figure 1, il actionne la commande spécifique pour ce mode de rotation.

La commande spécifique pour ce mode de rotation a pour effet de freiner et bloquer les arbres d'entrée (9 et 10) pour annuler toute action de la transmission principale du véhicule automoteur effective dans le mode de direction normale.

La chambre centrale entre les deux pistons de chaque essieu motodirecteur (1, 2) est alimentée pour ce mode de rotation, tandis que les chambres extérieures des pistons précités sont équilibrées ou reliées au réservoir ou à une source de pression faible.

La chambre centrale peut être alimentée par une pression provenant de la pompe hydrostatique de direction ou par une pompe de distribution de direction assistée du volant de direction.

L'alimentation de la chambre centrale a pour effet de déplacer les roues selon un mouvement de direction antagoniste, de manière à orienter les roues sur la trajectoire circulaire définie par le cercle (C) dont le centre coïncide avec la trace de l'axe de rotation sensiblement vertical (A).

L'orientation des roues selon une trajectoire prédéterminée définit ainsi un centre de trajectoire qui correspond à l'axe de rotation sensiblement vertical (A) du véhicule sur lui-même, lorsqu'au moins l'une des roues ainsi orientée est entraînée en rotation.

Pour animer en rotation l'une des roues, par exemple la roue arrière (5), l'arbre de transmission en sortie du différentiel (8) de l'essieu motodirecteur arrière (2) est équipé d'une motorisation indépendante débrayable, constituée par exemple par un moteur hydraulique (13) relié à l'arbre de sortie du différentiel (8) entraînant cette roue arrière (5).

Ce moteur hydraulique (13) constitue un moyen d'entraînement en rotation de l'arbre de transmission permettant de faire tourner le véhicule automoteur autour de l'axe sensiblement vertical (A).

Du fait que les arbres d'entrée (9 et 10) des différentiels (7 et 8) sont freinés et bloqués en rotation, l'entraînement de la roue (5) par le moyen d'entraînement (13) auxiliaire et débrayable permet de faire tourner la roue (5) dans un sens désiré et la roue (6) dans le sens opposé au sens de la roue (5), de manière à obtenir un entraînement en rotation régulier de l'essieu motodirecteur arrière (2).

Le déplacement de l'essieu motodirecteur arrière (2) provoque à son tour le déplacement de l'essieu motodirecteur avant (1) en entraînant les roues (3 et 4) dans le sens désiré correspondant à la rotation souhaitée autour de l'axe (A).

Du fait que l'arbre d'entrée (9) du différentiel avant (7) est freiné et bloqué, l'effet du différentiel bloqué (7) est d'entraîner les roues (3 et 4) en sens inverse l'une de l'autre, de manière à permettre une rotation régulière du véhicule automoteur autour de l'axe (A).

Le moyen auxiliaire (13) d'entraînement est avantageusement un moteur hydraulique à pistons radiaux libres, implanté dans la structure de l'essieu motodirecteur correspondant, en parallèle d'un frein immergé de type connu non représenté en détail.

Le débrayage du moteur (13) d'entraînement s'effectue alors en supprimant le contact des pistons avec la came réceptrice selon un système de « roue libre » connu.

L'invention couvre également le cas où le moyen d'entraînement auxiliaire (13) est un moteur hydraulique installé extérieurement sur la trompette de l'essieu motodirecteur par l'intermédiaire d'un engrenage conique décrabotable.

Enfin, dans le cas d'une transmission ou d'une direction électrique, le moyen auxiliaire d'entraînement (13) peut être un moteur électrique ou électrohydraulique.

De manière avantageuse, les commandes de rotation du véhicule automoteur autour de l'axe (A) sont compatibles avec le système de direction normale du véhicule automoteur auquel le dispositif est destiné.

De préférence, les commandes d'entraînement en rotation sont commandées par le système de direction normale du véhicule automoteur auquel le dispositif est destiné, de sorte qu'une action sur le volant de direction permet d'obtenir la rotation du véhicule dans le sens désiré par l'opérateur.

À cet effet, le dispositif selon l'invention peut comporter un circuit hydraulique apte à être relié au système de direction normale, et à être mis en service par la commande de commutation entre le mode de direction normale et le mode de rotation.

Une simple action sur la commande de commutation permet ainsi d'utiliser le système de direction normale pour commander la rotation du véhicule automoteur autour de l'axe sensiblement vertical (A).

On va maintenant décrire en référence aux figures 2 à 4 le mécanisme de direction permettant d'obtenir la solidarisation et la désolidarisation des tiges de direction correspondantes.

La description faite par exemple en référence au mécanisme (11) avant de direction est applicable dans les mêmes conditions au mécanisme (12) arrière de direction.

Sur la figure 2, un mécanisme de direction (11) comporte les tiges de sortie (11a, 11b) qui sont solidarisées l'une à l'autre par l'intermédiaire de pistons associés correspondants.

Une tige (11a) de sortie comporte un perçage central (20) d'alimentation en fluide hydraulique de la partie centrale du piston constitué de deux pistons solidarisés l'un à l'autre.

La pression du fluide hydraulique arrivant par la conduite (20) a pour effet d'exercer une poussée sur l'extrémité du piston de la tige (11b) pour exercer un effort de séparation entre les deux pistons correspondant aux tiges (11a, 11b).

La tige (11a) est solidaire d'une couronne à billes (21) de verrouillage, tandis que le piston solidaire de la tige (11b) est solidaire d'une tête à gorge (22) de verrouillage et d'une bague (23) de verrouillage.

Dans la position de solidarisation des deux pistons, les billes (21) sont verrouillées dans la gorge (22) par la bague (23) de verrouillage éventuellement précontrainte en position par un ressort non représenté.

Tant que la pression des chambres extérieures du mécanisme de direction (11) est supérieure à la pression du fluide hydraulique de la conduite (20), les deux pistons et les tiges (11a, 11 b) sont solidarisés entre eux par un moyen mécanique positif passif, de sorte que le mécanisme de direction agit comme un vérin de direction de type connu en soi, comportant un piston central unique et deux tiges de sortie.

Sur la figure 3, la pression du fluide hydraulique dans la conduite (20) est supérieure à la pression établie dans les chambres extérieures du mécanisme de direction (11). Cette pression supérieure de fluide hydraulique repousse la bague de verrouillage (23) et permet une libération des billes (21), de sorte que la tête de verrouillage dont la gorge (22) est libérée et coulisse en arrière, afin que les deux pistons se désolidarisent progressivement.

Le coulissement en arrière de la bague de verrouillage (23) est facilité par la sortie du fluide hydraulique à travers un orifice capillaire (24) permettant l'équilibrage de pression de part et d'autre.

Sur la figure 4, les pistons correspondant aux tiges (11a, 11b) sont séparés et sont disposés aux extrémités du cylindre du mécanisme de direction (11).

Cette disposition aux extrémités du cylindre du mécanisme de direction (11) correspond à une orientation des tiges représentée en traits pleins à la figure 1.

Dans cette position de rotation du véhicule automoteur, les tiges (11a, 11b, 12a, 12b) sont écartées l'une de l'autre pour aligner les roues sur la trajectoire circulaire définie par le cercle (C) de centre correspondant à la trace de l'axe (A) sensiblement vertical de rotation.

Pour passer d'une position de désolidarisation représentée à la figure 4 à une position de solidarisation représentée à la figure 2, il suffit d'envoyer la pression de fluide hydraulique dans les chambres extérieures et de relier la chambre centrale du mécanisme de direction au réservoir ou à une source de faible pression.

La pression exercée dans les chambres extérieures rapproche les deux pistons et les tiges l'une de l'autre jusqu'à une position dans laquelle les billes (21) pénètrent dans la gorge (22) à l'encontre de la bague (23) de verrouillage.

Après insertion des billes (21) dans la gorge (22), la bague de verrouillage (23) reprend sa position en étant poussée par la pression de fluide hydraulique pénétrant à travers le capillaire (24) et/ou par l'effet d'un ressort de précontrainte de la bague (23) en position de verrouillage.

Après solidarisation, le déplacement du piston central constitué par solidarisation des deux pistons précités s'effectue sans influencer le verrouillage par le moyen mécanique positif passif constitué par la coopération des organes (21, 22 et 23).

Grâce à l'invention, les moyens de solidarisation et de désolidarisation constitués par les pistons et les organes (21, 22 et 23) sont commandés de manière simple par la pression de fluide hydraulique dans la conduite (20) ménagée dans une des tiges de direction.

La commande de commutation entre un mode de direction normale et un mode de rotation peut ainsi être effectuée simplement au moyen d'un circuit hydraulique de distribution agissant sur les pressions respectives de fluide hydraulique dans les chambres extérieures et la conduite (20).

L'invention décrite en référence à un mode de réalisation particulier, ne lui est nullement limitée, mais couvre au contraire toute modification de forme et toute variante de réalisation dans le cadre et l'esprit des revendications annexées.

En particulier, dans le cas de moyen de solidarisation et de désolidarisation à commande électrique, la rotation et la solidarisation peuvent faire intervenir des billes de verrouillage intégrées dans un vérin électrique à circulation de billes.

## Revendications

1. Dispositif de direction de véhicule automoteur, notamment de véhicule de manutention, ledit véhicule automoteur comportant un essieu motodirecteur avant (1) et un essieu motodirecteur arrière (2), chaque essieu (1, 2) motodirecteur étant associé à un mécanisme (11, 12) de direction, dans lequel chaque mécanisme (11, 12) de direction comporte deux actionneurs de direction (11a, 11b ; 12a, 12b) reliés par des moyens de solidarisation et de désolidarisation, de manière à diriger normalement le véhicule automoteur dans la position de solidarisation desdits actionneurs (11a, 11b ; 12a, 12b) et de manière à faire tourner le véhicule automoteur autour d'un axe sensiblement vertical (A) dans la position de désolidarisation desdits actionneurs (11a, 11b ; 12a, 12b), dans lequel le mécanisme de direction (11, 12) comporte deux vérins hydrauliques comportant deux tiges associées (11a, 11b ; 12a, 12b) et deux pistons, les deux pistons étant aptes à être solidarisés de manière à former un vérin hydraulique à deux tiges (11a, 11b ; 12a, 12b) pour diriger normalement le véhicule automoteur et aptes à être désolidarisés de manière à former deux vérins hydrauliques séparés pour faire tourner le véhicule automoteur autour d'un axe sensiblement vertical (A), **caractérisé par le fait que** les deux actionneurs (11a, 11b ; 12a, 12b) de direction sont verrouillés l'un à l'autre dans la position de solidarisation par un moyen mécanique positif passif (21-23).

2. Dispositif de direction selon la revendication 1, **caractérisé par le fait que** les moyens (21-23) de solidarisation et de désolidarisation comportent une couronne à billes (21) de verrouillage et une tête de verrouillage à gorge (22), de manière à verrouiller les billes (21) dans la gorge (22) dans la position de solidarisation pour solidariser les deux pistons entre eux et de manière à libérer les billes (21) de la gorge (22) lors de la désolidarisation des deux pistons.

3. Dispositif de direction selon la revendication 2, **caractérisé en ce que** les moyens (21-23) de solidarisation et de désolidarisation des deux pistons comportent une bague de verrouillage (23).

4. Dispositif de direction selon la revendication 1, **caractérisé par le fait que** les deux pistons définissent entre eux une chambre apte à être alimentée en pression hydraulique par un passage (20) ménagé dans la tige (11a) d'un piston.

5. Dispositif de direction selon la revendication 1 ou la revendication 2, **caractérisé par le fait que** le dispositif comporte un moyen de blocage d'arbres d'entrée (9, 10) de différentiels d'essieux (1, 2) motodirecteurs, de manière à forcer les roues de chaque essieu motodirecteur (1 ou 2) à tourner en sens inverse l'une de l'autre.

6. Dispositif de direction selon la revendication 1 ou la revendication 2, **caractérisé par le fait que** le dispositif est commandé par le système de direction normale du véhicule automoteur auquel le dispositif est destiné.

7. Dispositif de direction selon la revendication 6, **caractérisé par le fait que** le dispositif comporte un circuit hydraulique apte à être relié au système de direction normale pour commander la rotation du véhicule automoteur.

## Patentansprüche

1. Lenkvorrichtung eines selbstfahrenden Fahrzeugs, insbesondere eines Transportfahrzeugs, wobei das selbstfahrende Fahrzeug eine angetriebene Vorderachse (1) und eine angetriebene Hinterachse (2) aufweist, wobei jede angetriebene Achse (1, 2) einem Lenkmechanismus (11, 12) zugeordnet ist, wobei jeder Lenkmechanismus (11, 12) zwei Lenkaktuatoren (11a, 11b; 12a, 12b) aufweist, die durch Verbindungs- und Trennmittel derart verbunden derart sind, dass das selbstfahrende Fahrzeug in der Verbindungsposition der Aktuatoren (11a, 11b; 12a, 12b) normal gelenkt wird und derart, dass das selbstfahrende Fahrzeug in der Trennposition der Aktuatoren (11a, 11b; 12a, 12b) um eine etwa vertikale Achse (A) gedreht wird, wobei der Lenkmechanismus (11, 12) zwei Hydraulikzylinder aufweist, die zwei zugeordnete Stangen (11a, 11b; 12a, 12b) und zwei Kolben aufweisen, wobei die zwei Kolben imstande sind, derart verbunden zu sein, dass sie einen Hydraulikzylinder mit zwei Stangen (11a, 11b; 12a, 12b) bilden, um das selbstfahrende Fahrzeug normal zu lenken und imstande sind, derart getrennt zu sein, dass sie zwei getrennte Hydraulikzylinder bilden, um das selbstfahrende Fahrzeug um eine etwa vertikale Achse (A) zu drehen, **dadurch gekennzeichnet, dass** die zwei Lenkaktuatoren (11a, 11b; 12a, 12b) in der Verbindungsposition durch ein passives positives mechanisches Mittel (21-23) miteinander verriegelt sind.

2. Lenkvorrichtung nach Anspruch 1, **dadurch gekennzeichnet, dass** die Verbindungs- und Trennmittel (21-23) einen Kugel-Verriegelungskranz (21) und einen Verriegelungskopf mit Nut (22) derart aufweisen, dass die Kugeln (21) in der Nut (22) in der Verbindungsposition verriegelt werden, um die zwei Kolben miteinander zu verbinden und derart, dass die Kugeln (21) aus der Nut (22) bei der Trennung der zwei Kolben freigegeben werden.

3. Lenkvorrichtung nach Anspruch 2, **dadurch gekennzeichnet, dass** die Verbindungs-und Trennmittel (21-23) der zwei Kolben einen Verriegelungsring (23) aufweisen.

4. Lenkvorrichtung nach Anspruch 1, **dadurch gekennzeichnet, dass** die zwei Kolben zwischen sich eine Kammer definieren, die imstande ist, durch einen in die Stange (11a) eines Kolbens eingearbeiteten Durchgang (20) mit Hydraulikdruck versorgt zu werden.

5. Lenkvorrichtung nach Anspruch 1 oder Anspruch 2, **dadurch gekennzeichnet, dass** die Vorrichtung ein Blockiermittel von Eingangswellen (9, 10) von Differenzialen angetriebener Achsen (1, 2) derart aufweist, dass die Räder jeder angetriebenen Achse (1 oder 2) gezwungen sind, sich gegenläufig zu drehen.

6. Lenkvorrichtung nach Anspruch 1 oder Anspruch 2, **dadurch gekennzeichnet, dass** die Vorrichtung durch das normale Lenksystem des selbstfahrenden Fahrzeugs gesteuert wird, für das die Vorrichtung bestimmt ist.

7. Lenkvorrichtung nach Anspruch 6, **dadurch gekennzeichnet, dass** die Vorrichtung einen Hydraulikkreis aufweist, der imstande ist, mit dem normalen Lenksystem verbunden zu sein, um die Rotation des selbstfahrenden Fahrzeugs zu steuern.

## Claims

1. A steering device of a self-propelled vehicle, in particular a handling vehicle, said self-propelled vehicle comprising a front drive axle (1) and a rear drive axle (2), each drive axle (1, 2) being associated with a steering mechanism (11, 12), in which each steering mechanism (11, 12) includes two steering actuators (11a, 11b; 12a, 12b) connected by securing and separating means, so as to orient the self-propelled vehicle normally in the secured position of said actuators (11a, 11 b; 12a, 12b) and so as to cause the self-propelled vehicle to rotate around a substantially vertical axis (A) in the separated position of said actuators (11a, 11b; 12a, 12b), in which the steering mechanism (11, 12) includes two hydraulic cylinders including two associated rods (11a, 11 b; 12a, 12b) and two pistons, the two pistons being able to be secured so as to form a hydraulic cylinder with two rods (11 a, 11 b; 12a, 12b) to orient the self-propelled vehicle normally and able to be separated so as to form two separate hydraulic cylinders to cause the self-propelled vehicle to rotate around a substantially vertical axis (A), **characterized in that** the two steering actuators (11 a, 11 b; 12a, 12b) are locked to each other in the separated position using a passive positive mechanical means (21-23).

2. The steering device according to claim 1, **characterized in that** the securing and separating means (21-23) include a locking ball ring (21) and a grooved locking head (22), so as to lock the balls (21) in the groove (22) in the securing position to secure the two pistons to each other and so as to release the balls (21) from the groove (22) during the separation of the two pistons.

3. The steering device according to claim 2, **characterized in that** the securing and separating means (21-23) of the two pistons include a locking ring (23).

4. The steering device according to claim 1, **characterized in that** the two pistons define a chamber between them that can be supplied with hydraulic pressure by a passage (20) formed in the rod (11a) of a piston.

5. The steering device according to claim 1 or claim 2, **characterized in that** the device includes an input shaft blocking means (9, 10) for steering axle (1, 2) differentials, so as to force the wheels of each steering axle (1 or 2) to rotate in opposite directions relative to one another.

6. The steering device according to claim 1 or claim 2, **characterized in that** the device is controlled by the normal steering system of the self-propelled vehicle for which the device is intended.

7. The steering device according to claim 6, **characterized in that** the device includes a hydraulic circuit that can be connected to the normal steering system to command the rotation of the self-propelled vehicle.
